# FASCICULE DE BREVET EUROPEEN

(11) **EP 0 408 519 B1**
(45) Date de publication et mention de la délivrance du brevet: **10.11.1993**
(21) Numéro de dépôt: 90830297.9
(22) Date de dépôt: 28.06.1990
(51) Int. Cl.: B01D 46/24, B01D 46/42

(54) **Dispositif de filtrage pour une disposition d'évacuation continue des déchets textiles produits par des machines pour produits manufacturés textiles**
Filtereinrichtung für eine Anlage zum kontinuierlichen Absaugen von textilen Abfällen von Maschinen zum Anfertigen von Textilien
Filter for use in a suction device for continous removal of textile waste from textile manufacturing machines

(30) Priorité: 14.07.1989 IT 947889
(43) Date de publication de la demande: 16.01.1991
(73) Titulaire: SOLIS S.r.l., I-50029 Tavarnuzze Firenze (IT)
(72) Inventeur: Gazzarrini, Vinicio, I-50023 Impruneta (Firenze) (IT)
(74) Mandataire: Martini, Lazzaro

(56) Documents cités:
- DE-A- 3 044 909
- GB-A- 1 323 265
- US-A- 4 502 874

## Description

La présente invention concerne un dispositif de filtrage automatique pour évacuer en continu les déchets produits par une ou plusieurs machines pour produits manufacturés textiles.

Il est connu que pendant le processus de production de produits manufacturés textiles au moyen d'une quelconque machine qui opère en produisant des déchets, telle qu'une coupeuse-couseuse, des moyens d'aspiration pourvoient à enlever les déchets au fur et à mesure qu'ils se forment et à les recueillir dans un caisson placé à proximité immédiate de la machine. Dans le cas de plusieurs machines opérant en produisant des déchets simultanément, lesdits moyens d'aspiration sont généralement centralisés en préférant recueillir les déchets de toutes les machines dans un seul dépot de grande capacité placé en général à une bonne distance des machines.
Il est évident que dans un cas comme dans l'autre, il se présente la nécessité de vider les récipients des déchets chaque fois qu'ils sont pleins. Pour permettre cela, s'il s'agit du caisson d'une seule machine, il est nécessaire d'arrêter celle-ci pendant le temps nécessaire au vidage du caisson et au nettoyage des filtres correspondants. Lorsqu'il s'agit d'un dépot centralisé, il est nécessaire d'arrêter l'installation d'aspiration générale avec arrêt de toutes les machines; pour cette raison ladite opération de vidage est effectuée, si possible, lors du changement d'équipe.
A part la nécessité de disposer de personnel préposé au déchargement des déchets des différents caissons ou du dépot centralisé et la perte de production en cas d'arrêt forcé d'une ou plusieurs machines pendant un poste de travail, la répétition des interventions précitées peut provoquer des complications, spécialement pour ce qui concerne l'efficacité de l'installation d'aspiration.

Il est connu d'après le document US-A-4.502.874, un collecteur de fibres pour extraire et recueillir en continu des fibres contenues dans l'air d'une installation de commande pour machines textiles, lequel comprend: plusieurs compartiments filtrants contigus, utilisables alternativement, chacun desquels possédant un canal d'entrée de l'air et un canal de sortie correspondant, et une ouverture de déchargement; un filtre à treillis dans chaque compartiment, lequel est interposé entre le canal d'entrée de l'air et le canal de sortie corresponadant; un conduit principal d'alimentation de l'air chargé de fibres, avec une extrémité d'entrée de l'air et une extrémité de sortie correspondante; des conduits auxiliaires d'alimentation de l'air, lesquels partent dudit conduit principal et chacun desquels alimente un canal d'entrée correspondante desdits compartiments; un déviateur à aube interposée entre ledit conduit principal de l'air et lesdits conduits auxiliaires, pour dévier de manière sélective l'air d'alimentation du conduit principal vers l'un ou l'autre des conduits auxiliaires; un capteur installé à l'intérieur de chacun des compartiments précités pour détecter la condition d'obstruction du filtre correspondant; un joint placé entre ledit capteur et ladite aube de déviation pour varier la position de cette dernière fonction de la condition d'obstruction du filtre; un conduit d'évacuation de l'air qui part de chaque compartiment et qui est relié en sortie à un conduit commun d'évacuation de l'air; une trémie installée en correspondance du canal de déchargement desdits compartiments filtrants; une porte prévue en correspondance du canal de déchargement de chaque compartiment filtrant; des moyens à vibration pour le nettoyage des filtres, lesquels sont installés dans chacun desdits compartiments et son activés par l'intermédiaire desdits capteurs.
Mais ce dispositif connu est structuré tout particulièrement pour la séparation des fibres textiles contenues dans l'air, et, par conséquent, il ne permet pas l'évacuation en continu des déchets produits par les machines pour produits textiles manufacturés.
Il est également connu, d'après le document GB-A-1.323.265, un filtre à diaphragme pour l'industrie chimique, lequel comprend une chambre de communication avec le filtre lorsque le dispositif est connecté, une vanne commandée de manière périodique pour relier ladite chambre avec une source d'air comprimé pour permettre à l'air comprimé de s'écouler dans le filtre et effectuer le déchargement du filtre, des moyens pneumatiques pour actionner ladite vanne, plusieurs soupapes de contrôle desdits moyens d'actionnement.
Mais ce dispositif connu ne permet pas lui non plus l'évacuation en continu des déchets produits par des machines pour produits textiles manufacturés.
Il est également connu, d'après le document DE-A-3044909, un dispositif pour séparer les poussières d'un fluidile gazeux, avec un conduit de refoulement, un distributeur et un dispositif collecteur relié à celui-ci, lequel comprend plusieurs chambres filtrantes de séparation des poussières contenues dans le gaz.
Mais ce dispositif connu n'est pas adapté lui non plus pour l'évacuation en continu des déchets produits par des machines pour produits textiles manufacturés.

La présente invention a pour but d'éliminer tous les inconvénients précités en proposant un dispositif automatique pour enlever et recueillir les déchets produits par une ou plusieurs machines pour produits manufacturés textiles, sans jamais arrêter aucune d'entre-elles.

Ce résultat a été atteint conformément à l'invention en adoptant l'idée de recueillir par aspiration tous les déchets dans un premier récipient à vidage automatique de grande capacité, en amont duquel se trouve un deuxième récipient tubulaire de petite capacité dans lequel les déchets sont recueillis temporairement, c'est-à-dire pendant le temps nécessaire pour vider le récipient principal, à la suite du blocage de sa sortie et à la déviation de l'aspiration du premier au deuxième récipient.

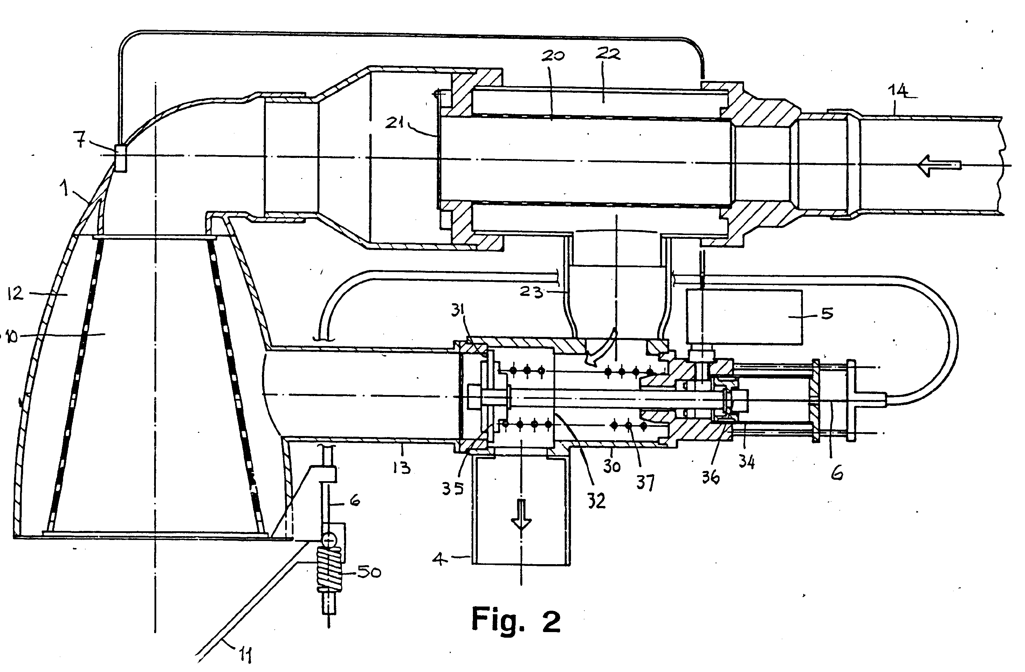

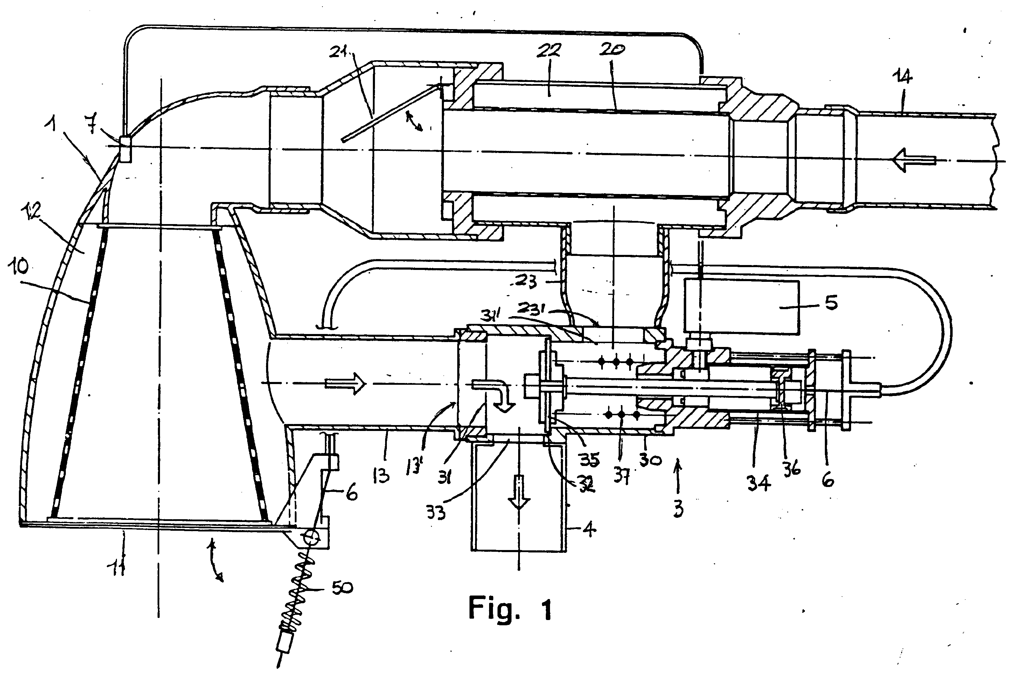

Les avantages obtenus grâce à l'invention consistent essentiellement dans le fait qu'il est possible de recueillir et décharger automatiquement les déchets d'une ou plusieurs machines sans jamais en arrêter aucune; qu'il est possible de régler l'aspiration pour obtenir le meilleur prélèvement et enlèvement des déchets produits par la machine correspondante; qu'il est possible d'augmenter la productivité; qu'un dispositif selon l'invention est de construction simple, d'installation facile sans modification des installations d'aspiration centralisée déjà existant pour les déchets textiles, de grande souplesse, de réglage automatisé, et de très grande fiabilité même après une longue période de fonctionnement continu.
Ces avantages et caractéristiques de l'invention ainsi que d'autres seront plus et mieux compris de chaque homme du métier à la lumière de la description qui va suivre et à l'aide des dessins annexés donnés à titre d'exemplification pratique d'une forme concrète de réalisation, mais à ne pas considérer dans le sens limitatif; dessins sur lesquels: la FIG. 1 représente une vue d'ensemble, en coupe axiale longitudinale, d'un dispositif selon l'invention en phase de régime, c'est-à-dire de récupération des déchets dans un récipient principal; la FIG. 2 représente la vue d'ensemble, en coupe axiale longitudinale, du dispositif de la Fig. 1 en phase de vidage du récipient principal, avec arrêt temporaire des déchets dans un récipient auxiliaire.

Réduit à sa structure essentielle et en référence aux dessins annexés, un dispositif selon l'invention pour évacuer les déchets produits par une ou plusieurs machines pour produits manufacturés textiles sans jamais en arrêter aucune, comprend un corps 1 avec:
- un récipient principal 10 de grande capacité, de forme tronconique, avec axe vertical, ouvert vers le haut, avec le fond pourvu d'un volet 11 ouvrable vers le bas et avec la surface latérale percée, lequel est logé dans une chambre 12 étanche à l'air, reliée à un conduit d'aspiration 4 d'un ventilateur (non représenté) au moyen d'un conduit 13 et lequel est relié en outre, en amont, avec une ou plusieurs machines pour produits manufacturés textiles au moyen d'un conduit 14 pour l'aspiration des déchets et avec l'interposition d'un deuxième récipient de capacité réduite;
- un récipient auxiliaire 20, de forme cylindrique à axe horizontal, ouvert à ses extrémités et avec la surface latérale percée, lequel constitue une partie dudit conduit 14 et qui est logé dans une chambre 22 étanche à l'air, reliée à son tour audit conduit d'aspiration 4 au moyen d'un conduit 23: la sortie dudit récipient 20 étant pourvue d'une soupape à clapet 21 pour obstruer l'entrée du récipient principal 10 et permettre de retenir les déchets provenant de la ou des machines dans ledit récipient auxiliaire 20 pendant le vidage du récipient principal 10;
- une vanne à piston 3, à commande pneumatique et réglage au moyen d'une électrovalve 5, dont le corps cylindrique 30 est pourvu d'une première entrée 31 en correspondance de la sortie 13' du conduit 13 du récipient principal 10, d'une deuxième entrée 31' en correspondance de la sortie 23' du conduit 23 du récipient auxiliaire 20 et laquelle est placée du côté opposé par rapport au disque 35, et d'une sortie 33 qui se trouve sur le conduit d'aspiration 4 et de telle manière que l'afflux d'air comprimé dans le cylindre 34 entra ne le déplacement du disque 35 dans un sens jusqu'à la fermeture de l'orifice 32, alors qu'un ressort de rappel 37, après le déchargement du cylindre 34, entra ne le déplacement du disque 35 dans l'autre sens jusqu'à la fermeture de l'orifice 31.

De cette manière, l'aspiration dans le conduit 4 provoque, dans le premier cas, le passage de l'air aspiré du conduit 14 au conduit 13 à travers le récipient principal 10 (voir Fig. 1) et dans le second cas, le passage de l'air du conduit 14 au conduit 23 à travers le récipient auxiliaire 20 (voir Fig. 2);
- des moyens pour la commande de l'ouverture et respectivement de la fermeture du volet 11 du récipient principal 10 avec un câble flexible 6, qui est fixé, à une extrémité, au piston 36 dudit cylindre pneumatique 34 et, à l'autre extrémité, à un bras dudit clapet 11 et avec interposition d'un ressort antagoniste 50 de telle manière qu'avec le piston 36 dans l'un ou l'autre de ses points morts on obtient la fermeture, ou respectivement l'ouverture, du volet 11;
- des moyens pour favoriser le vidage des déchets recueillis dans le récipient principal 10 avec une buse 7 alimentée avec de l'air comprimé de décharge du cylindre pneumatique 34;
- des moyens pour régler les interventions de l'électrovalve 5 avec un premier temporisateur ou un compteur des produits manufacturés dont le traitement engendre les déchets, qui commande la décharge du cylindre pneumatique 34 qui est suivi de l'ouverture du volet 11 du récipient principal 10 et un deuxième temporisateur qui contrôle le temps de vidage qui commande l'actionnement dudit cylindre pneumatique 34 qui est suivi de la fermeture dudit volet 11.

Le fonctionnement est le suivant. En phase de régime, le cylindre pneumatique 34 est en charge en maintenant fermé l'orifice 32 et le volet 11 du récipient principal 10; l'aspiration engendrée dans le conduit 4 provoque l'ouverture de la soupape à clapet 21 et crée une dépression dans le récipient principal 10 de sorte que les déchets qui arrivent du conduit 14 traversent le récipient auxiliaire 20 et sont recueillis dans le récipient principal 10. Dès que celui-ci est plein, le cylindre pneumatique 34 se vide, le ressort 37 déplace le disque 35 sur l'orifice 31 en le fermant et le câble 6 ouvre le volet 11; pendant que le récipient principal 10 se vide, avec la coopération du jet d'air de la buse 7, la soupape à clapet 21 se ferme par effet de la dépression dans la chambre 22 en obligeant les déchets arrivant par le conduit 14 à rester dans le récipient auxiliaire 20 pendant le temps nécessaire pour le vidage du récipient principal 10. Après quoi les conditions de régime se trouvent rétablies.

## Revendications

1. Dispositif de filtrage pour une disposition d'évacuation continue des déchets produits par des machines pour produits manufacturés textiles, caractérisé en ce qu'il est constitué d'un corps (1) comprenant:
- un récipient principal (10) de grande capacité et avec la surface latérale percée, dans lequel les déchets produits par une ou plusieurs machines sont recueillables par effet de la dépression qui est engendrable dans celui-ci par un aspirateur placé en aval, avec le fond pourvu d'un volet (11) ouvrable vers le bas pour en permettre le vidage spontané;
- un récipient auxiliaire (20) de capacité réduite, avec la surface latérale percée et lequel constitue une partie du conduit (14) d'arrivée des déchets, en amont dudit récipient principal (10) et dans lequel les déchets, pendant le vidage du récipient principal (10), sont retenus par effet de la fermeture temporaire de sa sortie au moyen d'une soupape à clapet (21) à la suite de la dépression engendrable dans celui-ci par ledit aspirateur;
- une vanne (3) pour interrompre l'aspiration à travers ledit récipient principal (10) et activer simultanément l'aspiration à travers ledit récipient auxiliaire (20) et inversément;
- des moyens (5) pour commander et régler ladite vanne (3);
- des moyens (6,50) pour ouvrir le volet (11) dudit récipient principal (10) après son remplissage et respectivement pour le fermer après son vidage;
- des moyens (7) pour favoriser le vidage du récipient principal (10).

2. Dispositif selon la revendication 1, caractérisé en ce que ledit récipient principal (10) est un pannier de forme tronconique à axe vertical, ouvert vers le haut et qui est logé dans une chambre (12) étanche à l'air.

3. Dispositif selon la revendication 1, caractérisé en ce que ledit récipient auxiliaire (20) est un panier de forme cylindrique à axe horizontal, ouvert à ses extrémités , et qui est logé dans une chambre (22) étanche à l'air.

4. Dispositif selon la revendication 1, caractérisé en ce que ladite vanne (3) est du type à piston, dont le corps (30) est pourvu d'un premier orifice (31) communicant avec le conduit d'aspiration (13) qui se trouve en aval dudit récipient principal (10), d'un deuxième orifice (32) communicant avec le conduit d'aspiration (23) qui se trouve en aval dudit récipient auxiliaire (20) et d'un troisième orifice (33) communicant avec ledit conduit d'aspiration (4): lesdits orifices (31,32) étant du côté opposé par rapport au disque (35) de la vanne (3).

5. Dispositif selon les revendications 1 et 4, caractérisé en ce que ladite vanne à piston (3) est à commande pneumatique à simple effet.

6. Dispositif selon la revendication 1, caractérisé en ce que lesdits moyens pour commander ladite vanne (3) consistent en une électrovalve (5).

7. Dispositif selon la revendication 1, caractérisé en ce que, lorsque le cylindre (34) de ladite vanne (3) est en charge, l'orifice (32) est fermé par le disque (35) et par conséquent l'aspiration pneumatique est activée à travers le seul récipient principal (10).

8. Dispositif selon les revendications 1 et 6, caractérisé en ce que pour régler les interventions de ladite électrovalve (5) en relation avec l'ouverture et respectivement la fermeture du volet (11), il comprend respectivement un premier temporisateur ou un compteur des produits manufacturés qui produisent les déchets et un deuxième temporisateur.

9. Dispositif selon les revendications 1 et 4, caractérisé en ce que ladite vanne (3) comprend un ressort (37) grâce auquel, lorsque le cylindre (34) est déchargé, l'orifice (31) est fermé par le disque (35) et par conséquent l'aspiration pneumatique est activée à travers le seul récipient auxiliaire (20).

10. Dispositif selon la revendication 1, caractérisé en ce que lesdits moyens pour ouvrir/fermer le volet (11) du récipient principal (10) consistent en un tirant (6) guidé, avec une extrémité fixée au piston (36) dudit cylindre (34) et avec l'autre extrémité fixée au volet (11) avec interposition d'un ressort antagoniste (50) de manière à ce qu'avec le piston (36) dans la position correspondant à l'orifice (32) fermé, le tirant (6) est relâché, le ressort (50) actif et le volet (11) fermé et, inversément, avec le piston (36) dans la position correspondant à l'orifice (31) fermé, le tirant (6) est tendu, le ressort (50) comprimé et le volet (11) ouvert.

11. Dispositif selon la revendication 1, caractérisé en ce que lesdits moyens pour favoriser le vidage du récipient principal (10) consistent en une buse alimentée avec de l'air comprimé qui est récupéré à la décharge du cylindre (34).

## Patentansprüche

1. Filtervorrichtung für eine Anlage zum kontinuierlichen Absaugen von Abfällen, die von Maschinen zur Herstellung von Textilprodukten erzeugt werden,
**dadurch gekennzeichnet**, daß sie von einem Körper (1) gebildet wird, der folgende Bestandteile umfaßt:
- einen Hauptbehälter (10) mit großer Aufnahmekapazität, dessen Seitenfläche gelocht ist, in dem die von einer oder mehreren Maschinen erzeugten Abfälle durch den Unterdruck sammelbar sind, der in dem Hauptbehälter vermittels einer stromab angeordneten Ansaugvorrichtung erzeugbar ist, und dessen Boden mit einer Klappe (11) versehen ist, die nach unten geöffnet werden kann, um dadurch eine selbsttätige Entleerung zur ermöglichen;
- einen Hilfsbehälter (20) mit verminderter Aufnahmekapazität, dessen Seitenfläche gelocht ist und der einen Teil der Zuführleitung (14) für die Abfälle stromaufwärts vom Hauptbehälter (10) bildet und in dem die Abfälle während der Entleerung des Hauptbehälters (10) dadurch zurückgehalten werden, daß sein Ausgang mit Hilfe eines Klappenventils (21) in Folge des im Hilfsbehälter durch die Ansaugvorrichtung erzeugbaren Unterdrucks zeitweise geschlossen wird;
- ein Ventil (3) zum Unterbrechen der Ansaugung durch den Hauptbehälter (10) hindurch und zum gleichzeitigen Aktivieren der Ansaugung durch den Hilfsbehälter (20) hindurch und umgekehrt;
- Einrichtungen (5) zum Steuern und Regeln des Ventils (3);
- Einrichtungen (6,50) zum Öffnen der Klappe (11) des Hauptbehälters (10), wenn er voll ist, bzw. zum Schließen der Klappe nach dem Entleeren des Hauptbehälters;
Einrichtungen (7), um das Entleeren des Hauptbehälters (10) zu unterstützen.

2. Vorrichtung nach Anspruch 1, dadurch gekennzeichnet, daß der Hauptbehälter (10) ein stumpfkegelförmiger Korb mit senkrechter Achse ist, der nach oben offen und in einer luftdichten Kammer (12) angeordnet ist.

3. Vorrichtung nach Anspruch 1, dadurch gekennzeichnet, daß der Hilfsbehälter (20) ein zylinderförmiger Korb mit horizontaler Achse ist, der an seinen Enden offen und in einer luftdichten Kammer (22) angeordnet ist.

4. Vorrichtung nach Anspruch 1, dadurch gekennzeichnet, daß das Ventil (3) ein Kolbenventil ist, dessen Gehäuse (30) mit einer ersten Öffnung (31), die mit der Ansaugleitung (13) in Verbindung steht, die sich stromabwärts vom Hauptbehälter (10) befindet, einer zweiten Öffnung (32), die mit der Ansaugleitung (23) in Verbindung steht, die sich stromabwärts vom Hilfsbehälter (20) befindet, und einer dritten Öffnung (33) versehen ist, die mit der Ansaugleitung (4) in Verbindung steht, wobei sich die Öffnungen (31,32) auf gegenüberliegenden Seiten bezüglich der Scheibe (35) des Ventils (3) befinden.

5. Vorrichtung nach den Ansprüchen 1 und 4, dadurch gekennzeichnet, daß das Kolbenventil (3) eine einfachwirkende pneumatische Steuerung besitzt.

6. Vorrichtung nach Anspruch 1, dadurch gekennzeichnet, daß die Einrichtungen zum Steuern des Ventils (3) aus einem Elektroventil (5) bestehen.

7. Vorrichtung nach Anspruch 1, dadurch gekennzeichnet, daß dann, wenn der Zylinder (34) des Ventils (3) belastet ist, die Öffnung (32) durch die Scheibe (35) verschlossen ist und daß folglich die pneumatische Ansaugung allein durch den Hauptbehälter (10) hindurch aktiviert ist.

8. Vorrichtung nach den Ansprüchen 1 und 6, dadurch gekennzeichnet, daß sie zum Regeln der Einsätze des Elektroventils (5) in bezug auf das Öffnen bzw. Schließen der Klappe (11) einen ersten Zeitgeber oder einen Zähler für die hergestellten Produkte, die die Abfälle verursachen, und einen zweiten Zeitgeber umfaßt.

9. Vorrichtung nach den Ansprüchen 1 und 4, dadurch gekennzeichnet, daß das Ventil (3) eine Feder (37) umfaßt, mit deren Hilfe dann, wenn der Zylinder (34) entlastet wird, die Öffnung (31) durch die Scheibe (35) verschlossen und in Folge hiervon die pneumatische Ansaugung allein durch den Hilfsbehälter (20) hindurch aktiviert wird.

10. Vorrichtung nach Anspruch 1, dadurch gekennzeichnet, daß die Einrichtungen zum Öffnen/Schließen der Klappe (11) des Hauptbehälters (10) aus einer geführten Zugvorrichtung (6) bestehen, deren eines Ende am Kolben (36) des Zylinders (34) und deren anderes Ende an der Klappe (11) unter Zwischenschaltung einer Ausgleichsfeder (50) in der Weise befestigt ist, daß dann, wenn sich der Kolben (36) in der entsprechenden Stellung an der geschlossenen Öffnung (32) befindet, die Zugvorrichtung (6) entspannt, die Feder (50) aktiv und die Klappe (11) geschlossen ist, und umgekehrt dann, wenn sich der Kolben (36) in der entsprechenden Stellung an der geschlossenen Öffnung (31) befindet, die Zugvorrichtung (6) gespannt, die Feder (50) zusammengedrückt und die Klappe (11) geöffnet ist.

11. Vorrichtung nach Anspruch 1, dadurch gekennzeichnet, daß die Einrichtungen zur Unterstützung der Entleerung des Hauptbehälters (10) aus einer Düse bestehen, die mit komprimierter Luft versorgt wird, die beim Entlasten des Zylinders (34) rückgewonnen wird.

## Claims

1. A filtering device for a continuous evacuation device for waste produced by machines for manufactured textile products characterised by the fact that it consists of a body (1) containing:
- a main receptacle (10) of large capacity and with a pierced side surface, in which the waste produced by one or several machines can be collected by the effect of a drop in pressure which can be caused in it by an extractor situated downstream, with the bottom provided with a flap (11) which can be opened downwards to permit spontaneous emptying;
- an auxiliary receptacle (20) of reduced capacity, with the side surface pierced and which constitutes part of the incoming pipe (14) for waste, upstream of the said main receptacle (10) and in which the waste is retained during emptying of the main receptacle (10), by the effect of temporary closing of its outlet by means of a valve (21) following the drop in pressure caused in the latter by the said extractor;
- a valve (3) to interrupt the extraction across the said main receptacle (10) and simultaneously to activate extraction across the said auxiliary receptacle (20) and vice versa;
- means (5) to control and regulate the said valve (3);
- means (6, 50) for opening the flap (11) of the said main receptacle (10) after it is full and to close it respectively after its emptying;
- means (7) favouring the emptying of the main receptacle (10).

2. Device according to claim 1, characterised by the fact that the said main receptacle (10) is in a tapered shape with vertical axis, open above and which is situated in a chamber (12) sealed to the air.

3. Device according to claim 1, characterised by the fact that the said auxiliary receptacle (20) is a basket of cylindrical shape with horizontal axis, open at its ends, and which is situated in a chamber (22) sealed to the air.

4. Device according to claim 1, characterised by the fact that the said valve (3) is of the piston type, where the body (30) is provided with a first orifice (31) communicating with the extraction pipe (13) which is situated downstream of the said main receptacle (10), with a second orifice (32) communicating with the extraction pipe (23) which is situated downstream of the said auxiliary receptacle (20) and with a third orifice (33) communicating with the said extraction pipe (4): the said orifices (31, 32) being on the opposite side relative to the disk (35) of valve (3).

5. Device according to claims 1 and 4, characterised by the fact that the said piston valve (3) has simple pneumatic control.

6. Device according to claim 1, characterised by the fact that the said means for controlling the said valve (3) consist of an electrical valve (5).

7. Device according to claim 1, characterised by the fact that if the cylinder (34) of the said valve (3) is in control, the orifice (32) is closed by the disk (35) and consequently pneumatic extraction is activated across the only main receptacle (10).

8. Device according to claims 1 and 6, characterised by the fact that to regulate the operation of the said electric valve (5) relative to the opening and closing respectively of flap (11), it contains a first time delay relay or a counter of the manufactured products which produce the waste, and a second time delay relay.

9. Device according to claims 1 and 4, characterised by the fact that the said valve (3) contains a spring (37) thanks to which, when the cylinder (34) is discharged, the orifice (37) is closed by disk (35) and consequently pneumatic extraction is activated across the only auxiliary receptacle (20).

10. Device according to claim 1, characterised by the fact that the said means for opening/closing the flap (11) of the main receptacle (10) consist of a guided tierod (6) with one end fixed to piston (36) of the said cylinder (34) and with the other end fixed to flap (11) with interposition of an opposing spring (50), 80 that with the piston (36) in the position corresponding to orifice (32) closed, the tierod (6) is released, the spring (50) is active and the flap (11) is closed, and conversely, with the piston (36) in the position corresponding to the orifice (31) closed, the tierod (6) is in the tensioned position, the spring (50) is compressed and the flap (11) is open.

11. Device according to claim 1, characterised by the fact that the said means to favour emptying of the main receptacle (10) consist of a nozzle fed with compressed air which is recovered on discharge of the cylinder (34).
